(19) **Europäisches Patentamt / European Patent Office / Office européen des brevets**

(11) **EP 4 653 119 A1**

(12) # EUROPEAN PATENT APPLICATION
published in accordance with Art. 153(4) EPC

(43) Date of publication:
26.11.2025 Bulletin 2025/48

(21) Application number: 24797086.6

(22) Date of filing: 24.04.2024

(51) International Patent Classification (IPC):
*B23K 11/14* (2006.01)  *B23K 11/16* (2006.01)
*B23K 11/24* (2006.01)  *C22C 38/00* (2006.01)
*C22C 38/60* (2006.01)

(52) Cooperative Patent Classification (CPC):
B23K 11/14; B23K 11/16; B23K 11/24;
C22C 38/00; C22C 38/60

(86) International application number:
PCT/JP2024/016147

(87) International publication number:
WO 2024/225340 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.04.2023 JP 2023071096

(71) Applicant: JFE Steel Corporation
Tokyo 100-0011 (JP)

(72) Inventors:
• ENDO, Reiko
Tokyo 100-0011 (JP)
• YAMAGISHI, Daiki
Tokyo 100-0011 (JP)
• TAKASHIMA, Katsutoshi
Tokyo 100-0011 (JP)

(74) Representative: Haseltine Lake Kempner LLP
Bürkleinstrasse 10
80538 München (DE)

(54) **PROJECTION WELD JOINT AND METHOD FOR MANUFACTURING SAME**

(57) Provided are a projection welded joint with improved peeling strength and delayed fracture resistance, and a method for producing the same. The projection welded joint has a steel sheet and a nut, in which the steel sheet has a predetermined chemical composition, and the minimum hardness Hva (HV) of region a and the base metal hardness Hvm (HV) of the steel sheet satisfies Hva/Hvm≤0.90. Region a is defined below based on a cross-section including a center axis of the nut and passing through a center of a joint between the steel sheet and the nut, of the projection welded joint: with an end point on an inner peripheral side of the nut in contact with the steel sheet being defined as point A, and an end point on an outer peripheral side of the nut in contact with the steel sheet being defined as point B, a length of a line segment connecting points A and B being defined as 2L, a point located on the line segment at a distance of L/2 from point B toward point A being defined as point C1, a point located on a line formed by a surface of the steel sheet continuous with the line segment, at a distance of L from point B, being defined as point C2, points located inside the steel sheet at a depth of 0.80 mm in a sheet thickness direction from points C2 and C1 being defined as points C3 and C4, respectively, an internal region of a rectangle formed by connecting points C1, C2, C3, and C4 is defined as region a.

FIG. 2

**Description**

TECHNICAL FIELD

This disclosure relates to a projection welded joint in which a steel sheet and a nut having a projection are projection welded to each other via the projection and a method of producing the same.

BACKGROUND

In recent years, various high strength steel sheets (high tensile strength steel sheets) have been applied to automotive bodies from the perspective of weight reduction for fuel efficiency and ensuring crashworthiness of automobiles. In addition, when resistance spot welding cannot be used in the automotive assembly process, arc welding or bolt fastening is employed. Furthermore, bolt fastening is also widely used for joining dissimilar materials such as steel sheets and aluminum. In bolt fastening, a nut having a projection is projection welded (resistance welded) to a steel sheet, and then another sheet is fastened with a bolt for assembly.

One of the quality assurance measures for projection welding is the push-in peeling strength (also simply referred to as peeling strength). With the recent increase in the strength of steel sheets, the joint between the steel sheet and the nut has become more susceptible to embrittlement, making it increasingly difficult to ensure sufficient peeling strength. Furthermore, with the increase in the strength of steel sheets, there arises a problem in that the susceptibility to hydrogen embrittlement, which leads to delayed fracture, increases. Additionally, due to the influence of anti-rust oil or coated or plated layers on the surface of the steel sheet, hydrogen can be absorbed into the welded portion, making delayed fracture more likely to occur.

JP2012-157900A (PTL 1) describes a projection welded joint where the area ratio between the joint and the nominal diameter part of the nut or bolt satisfies a predetermined relationship, and the maximum hardness of the joint and heat-affected zone (HAZ) is 550 HV or less. Furthermore, PTL 1 reports that a high joint strength can be obtained by increasing the electrode force during projection welding. Furthermore, JP2013-078784A (PTL 2) reports that subsequent-current application at a current value lower than the welding current value to temper the joint results in higher joint strength.

CITATION LIST

Patent Literature

PTL 1: JP2012-157900A
PTL 2: JP2013-078784A

SUMMARY

(Technical Problem)

However, conventional methods have issues such as a decrease in peeling strength and the occurrence of delayed fracture when projection welding high strength steel sheets, indicating room for improvement.

In light of the above issues, this disclosure aims to provide a projection welded joint with improved peeling strength and delayed fracture resistance and a method of producing the same.

(Solution to Problem)

For achieving the aforementioned object, we conducted keen study and found the following. High strength steel sheets have a higher carbon content than conventional steel sheets, making the joint more prone to embrittlement, which reduces the peeling strength of the projection welded joint. To improve the peeling strength of projection welded joints using high strength steel sheets, it is effective to soften the joined interface between the nut and the steel sheet to be welded to relieve stress concentration. Moreover, delayed fracture is partly caused by the hardness of the joint that becomes the fracture origin, as well as the influence of segregation and inclusions present in the joint. Therefore, to suppress delayed fracture, it is effective to prevent hardening of the joint and reduce residual stress. In particular, by defining region a as the region near the boundary between the steel sheet and the nut, including part of the joint, and reducing the hardness of region a, the delayed fracture resistance can be improved. This is because softening the hardness of region a improves the toughness of region a and further reduces residual stress, thereby making delayed fracture less likely to occur.

We thus provide the following.

[1] A projection welded joint in which a steel sheet and a nut having a projection are projection welded to each other via the projection,

wherein the steel sheet comprises a chemical composition containing (consisting of), in mass%,
C: 0.05 % or more and 0.50 % or less,
Si: 0.1 % or more and 2.0 % or less,
Mn: 1.5 % or more and 4.0 % or less,
P: 0.10 % or less,
S: 0.005 % or less,
N: 0.010 % or less, and
O: 0.030 % or less,
and further optionally containing at least one element selected from the group consisting of
Al: 2.00 % or less,
B: 0.0050 % or less,
Ca: 0.005 % or less,
Cr: 1.00 % or less,
Cu: 0.80 % or less,
Ni: 1.00 % or less,
Mo: 1.00 % or less,
Ti: 0.200 % or less,
V: 0.500 % or less,
Nb: 0.080 % or less,
Sb: 0.200 % or less, and
Sn: 0.200 % or less, with the balance being Fe and inevitable impurities, and
a minimum hardness Hva (HV) of region a according to the definitions below in the steel sheet and a base metal hardness Hvm (HV) of the steel sheet satisfy Equation (1) below:

$$\mathrm{Hva/Hvm} \leq 0.90 \tag{1}$$

in which region a above is defined below based on a cross-section including a center axis of the nut and passing through a center of a joint between the steel sheet and the nut, of the projection welded joint: with an end point on an inner peripheral side of the nut in contact with the steel sheet being defined as point A, and an end point on an outer peripheral side of the nut in contact with the steel sheet being defined as point B, a length of a line segment connecting points A and B being defined as 2L, a point located on the line segment at a distance of L/2 from point B toward point A being defined as point C1, a point located on a line formed by a surface of the steel sheet continuous with the line segment, at a distance of L from point B, being defined as point C2, a point located inside the steel sheet at a depth of 0.80 mm in a sheet thickness direction from point C2 being defined as point C3, and a point located inside the steel sheet at a depth of 0.80 mm in the sheet thickness direction from point C1 being defined as point C4, an internal region of a rectangle formed by connecting points C1, C2, C3, and C4 is defined as region a.

[2] A method for producing a projection welded joint by projection welding a steel sheet and a nut having a projection to each other via the projection,

wherein the steel sheet comprises a chemical composition containing (consisting of), in mass%,
C: 0.05 % or more and 0.50 % or less,
Si: 0.1 % or more and 2.0 % or less,
Mn: 1.5 % or more and 4.0 % or less,
P: 0.10 % or less,
S: 0.005 % or less,
N: 0.010 % or less, and
O: 0.030 % or less,
and further optionally containing at least one element selected from the group consisting of
Al: 2.00 % or less,

B: 0.0050 % or less,
Ca: 0.005 % or less,
Cr: 1.00 % or less,
Cu: 0.80 % or less,
Ni: 1.00 % or less,
Mo: 1.00 % or less,
Ti: 0.200 % or less,
V: 0.500 % or less,
Nb: 0.080 % or less,
Sb: 0.200 % or less, and
Sn: 0.200 % or less, with the balance being Fe and inevitable impurities, and
the projection welding has:

a main current application step in which current is applied at a current value $I_1$ (kA) for a welding time $t_1$ (ms) to form a joint between the steel sheet and the nut;
a first non-current application step in which a non-current period having a non-welding time $t_{c1}$ (ms) satisfying Equation (2) below is provided;
a first subsequent-current application step in which current is applied at a current value $I_2$ (kA) satisfying Equation (3) below for a welding time $t_2$ (ms) satisfying Equation (4) below; and
further optionally,
a second non-current application step in which a non-current period having a non-welding time $t_{c2}$ (ms) satisfying Equation (5) below is provided, followed by a second subsequent-current application step in which current is applied at a current value $I_3$ (kA) satisfying Equation (6) below for a welding time $t_3$ (ms) satisfying Equation (7) below:

$$10 \leq t_{c1} \leq 300 \tag{2}$$

$$I_1 \leq I_2 \leq 3.00 I_1 \tag{3}$$

$$30 \leq t_2 \leq 300 \tag{4}$$

$$0 < t_{c2} \leq 400 \tag{5}$$

$$0.70 I_2 \leq I_3 \leq 1.30 I_2 \tag{6}$$

$$0 < t_3 \leq 300 \tag{7}.$$

(Advantageous Effect)

This disclosure can provide a projection welded joint with improved peeling strength and delayed fracture resistance.

BRIEF DESCRIPTION OF THE DRAWINGS

In the accompanying drawings:

FIG. 1 is a cross-sectional view including the center axis of a nut used in one of the disclosed embodiment;
FIG. 2 is a partial cross-sectional view of a projection welded joint according to one of the disclosed embodiments, the view including the center axis of the nut and passing through the center of the joint between the steel sheet and the nut;
FIG. 3A is a top view of a nut provided with three projections used in one of the disclosed embodiments, and FIG. 3B is a top view of a nut provided with four projections used in one of the disclosed embodiments;
FIG. 4 illustrates region a and hardness measurement points in region a of the cross-section of a projection welded joint according to one of the disclosed embodiments; and
FIG. 5 illustrates a measurement region 30 for the base metal hardness Hvm and hardness measurement points within the region 30 in the cross-section of a projection welded joint according to one of the disclosed embodiments.

DETAILED DESCRIPTION

The following describes embodiments of the projection welded joint and its producing method according to this disclosure. The embodiments described below are examples that embody this disclosure and do not limit the configuration of this disclosure to these specific examples.

[Steel sheet]

First, the chemical composition of the steel sheet in the projection welded joint according to this disclosure will be explained. In the following description, the symbol "%" for chemical composition refers to "mass%" unless otherwise specified.

C: 0.05 % or more and 0.50 % or less

C is an element that contributes to the strengthening of steel sheets. When the C content of the steel sheet is less than 0.05 %, the strength of the steel sheet decreases, making it extremely difficult to produce steel sheets with a tensile strength of 780 MPa or higher. Therefore, the C content of the steel sheet should be 0.05 % or more. The C content of the steel sheet is preferably 0.10 % or more. On the other hand, when the C content of the steel sheet exceeds 0.50 %, the strength of the steel sheet increases, but the amount of hard martensite becomes excessive, leading to an increase in microvoids. Furthermore, excessive hardening of the joint occurs, and embrittlement progresses, making it difficult to improve the peeling strength. Therefore, the C content of the steel sheet should be 0.50 % or less. The C content of the steel sheet is preferably 0.45 % or less.

Si: 0.1 % or more and 2.0 % or less

When the Si content of the steel sheet is 0.1 % or more, it effectively contributes to the strengthening of the steel sheet. Additionally, since Si is a ferrite-forming element, it works favorably for the formation of ferrite at the end portion of the joint. Therefore, the Si content of the steel sheet should be 0.1 % or more. The Si content of the steel sheet is preferably 0.2 % or more. On the other hand, when the Si content in the steel sheet exceeds 2.0 %, the steel sheet is strengthened, but it may adversely affect toughness. Therefore, the Si content in the steel sheet should be 2.0 % or less. The Si content is preferably 1.8 % or less.

Mn: 1.5 % or more and 4.0 % or less

When the Mn content is 1.5 % or more, high peeling strength can be obtained without prolonged cooling. Therefore, the Mn content in the steel sheet should be 1.5 % or more. The Mn content in the steel sheet is preferably 2.0 % or more. On the other hand, when the Mn content in the steel sheet exceeds 4.0 %, embrittlement of the welded portion or cracks associated with embrittlement become significantly apparent, making it difficult to improve peeling strength. Therefore, the Mn content in the steel sheet should be 4.0 % or less. The Mn content in the steel sheet is preferably 3.5 % or less.

P: 0.10 % or less

P is an inevitable impurity, but when the P content in the steel sheet exceeds 0.10 %, strong segregation appears at the end portion of the joint of the welded portion, making it difficult to improve peeling strength. Therefore, the P content in the steel sheet should be 0.10 % or less. The P content in the steel sheet is preferably 0.05 % or less, and more preferably 0.02 % or less. There is no specific lower limit for the P content in the steel sheet. However, excessively reducing the P content incurs higher costs. Thus, the P content of the steel sheet is preferably 0.005 % or more.

S: 0.005 % or less

S is an element that segregates at the grain boundaries and embrittles the steel sheet, and it is an element that is inevitably included. Moreover, when the S content in the steel sheet exceeds 0.005 %, it reduces the local deformability of sulfides and the steel sheet. Therefore, the S content in the steel sheet should be 0.005 % or less. The S content in the steel sheet is preferably 0.004 % or less, and more preferably 0.003 % or less. There is no specific lower limit for the S content in the steel sheet. However, excessively reducing the S content incurs higher costs. Thus, the S content of the steel sheet is preferably 0.001 % or more.

N: 0.010 % or less

N is an inevitably included element, and when the N content in the steel sheet exceeds 0.010 %, it deteriorates the anti-aging property of the steel sheet. Therefore, the N content in the steel sheet should be 0.010 % or less. The N content in the steel sheet is preferably 0.008 % or less. There is no specific lower limit for the N content in the steel sheet. However, excessively reducing the N content incurs higher costs, so the N content in the steel sheet is preferably 0.001 % or more.

O: 0.030 % or less

When the O content in the steel sheet exceeds 0.030 %, it generates nonmetallic inclusions, which deteriorate the cleanliness and toughness of the steel sheet. Therefore, the O content in the steel sheet should be 0.030 % or less. The O content in the steel sheet is preferably 0.020 % or less. There is no specific lower limit for the O content in the steel sheet. However, excessively reducing the O content incurs higher costs, so the O content in the steel sheet is preferably 0.005 % or more.

The steel sheet used in this disclosure can include, in addition to the above chemical composition, at least one element selected from the group consisting of Al, B, Ca, Cr, Cu, Ni, Mo, Ti, V, Nb, Sb, and Sn as needed. The balance of the chemical composition is Fe and inevitable impurities.

Al: 2.00 % or less

Al is an element that can control the microstructure for austenite grain refinement, but excessive addition can deteriorate toughness. Therefore, when adding Al, the Al content should be 2.00 % or less. The Al content is preferably 1.50 % or less. Although there is no specific lower limit for the Al content, from the perspective of sufficiently obtaining the effects of Al addition, the Al content is preferably 0.01 % or more, and more preferably 1.20 % or more.

B: 0.0050 % or less

B is an element that can improve hardenability and strengthen the steel sheet, but excessive addition saturates its effect. Therefore, when adding B, the B content should be 0.0050 % or less. The B content is preferably 0.0010 % or less. Although there is no specific lower limit for the B content, from the perspective of sufficiently obtaining the effects of B addition, the B content is preferably 0.0003 % or more.

Ca: 0.005 % or less

Ca is an element that can contribute to improving the workability of the steel sheet, but excessive addition can deteriorate toughness. Therefore, when adding Ca, the Ca content should be 0.005 % or less. The Ca content is preferably 0.004 % or less. Although there is no specific lower limit for the Ca content, from the perspective of sufficiently obtaining the effects of Ca addition, the Ca content is preferably 0.001 % or more.

Cr: 1.00 % or less

Cr is an element that can improve the strength of steel sheets by enhancing hardenability, but excessive addition may lead to deterioration in the toughness of joints. Therefore, when adding Cr, the Cr content should be 1.00 % or less. The Cr content is preferably 0.80 % or less. Additionally, although there is no specific lower limit for the Cr content, from the perspective of sufficiently obtaining the effects of Cr addition, the Cr content is preferably 0.01 % or more.

Cu: 0.80 % or less

Cu is an element that can contribute to improving the strength of steel sheets, but excessive addition can deteriorate toughness. Therefore, when adding Cu, the Cu content should be 0.80 % or less. The Cu content is preferably 0.60 % or less. Additionally, although there is no specific lower limit for the Cu content, from the perspective of sufficiently obtaining the effects of Cu addition, the Cu content is preferably 0.006 % or more.

Ni: 1.00 % or less

Ni is an element that can contribute to improving the strength of steel sheets, but excessive addition can deteriorate toughness. Therefore, when adding Ni, the Ni content should be 1.00 % or less. The Ni content is preferably 0.80 % or less. Additionally, although there is no specific lower limit for the Ni content, from the perspective of sufficiently obtaining the effects of Ni addition, the Ni content is preferably 0.005 % or more.

Mo: 1.00 % or less

Mo is an element that can contribute to improving the strength of steel sheets, but excessive addition can deteriorate toughness. Therefore, when adding Mo, the Mo content should be 1.00 % or less. The Mo content is preferably 0.80 % or less. Additionally, although there is no specific lower limit for the Mo content, from the perspective of sufficiently obtaining the effects of Mo addition, the Mo content is preferably 0.006 % or more.

Ti: 0.200 % or less

Ti is an element that can improve hardenability and strengthen steel sheets, but when added in large amounts, it forms carbides, which significantly deteriorate toughness due to precipitation hardening. Therefore, when Ti is added, the Ti content should be set to 0.200 % or less. The Ti content is preferably 0.150 % or less. Although there is no specific lower limit for the Ti content, from the perspective of sufficiently obtaining the effects of Ti addition, the Ti content is preferably 0.003 % or more.

V: 0.500 % or less

V is an element that can strengthen steel by controlling the microstructure through precipitation hardening, but when added in large amounts, it can lead to a deterioration in the toughness of joints. Therefore, when V is added, the V content should be 0.500 % or less. The V content is preferably 0.300 % or less. Although there is no specific lower limit for the V content, from the perspective of sufficiently obtaining the effects of V addition, the V content is preferably 0.005 % or more.

Nb: 0.080 % or less

Nb is an element that can improve cross tensile strength and delayed fracture resistance after resistance welding by forming fine carbonitrides, but excessive addition not only significantly reduces elongation but also severely impairs toughness. Therefore, when Nb is added, the Nb content should be 0.080 % or less. The Nb content is preferably 0.070 % or less, and more preferably 0.060 % or less. Although there is no specific lower limit for the Nb content, from the perspective of sufficiently obtaining the effects of Nb addition, the Nb content is preferably 0.005 % or more.

Sb: 0.200 % or less

Sb is an element that can suppress nitriding and oxidation on the surface of steel sheets, but excessive addition reduces toughness. Therefore, when Sb is added, the Sb content should be 0.200 % or less. Although there is no specific lower limit for the Sb content, from the perspective of sufficiently obtaining the effects of Sb addition, the Sb content is preferably 0.002 % or more.

Sn: 0.200 % or less

Sn is an element that can suppress nitriding and oxidation on the surface of steel sheets, and adding Sn stabilizes the material property, but excessive addition reduces toughness. Therefore, when Sn is added, the Sn content should be 0.200 % or less. Although there is no specific lower limit for the Sn content, from the perspective of sufficiently obtaining the effects of Sn addition, the Sn content is preferably 0.002 % or more.

The steel sheet with the above chemical composition preferably has a tensile strength of 980 MPa or higher, and more preferably 1180 MPa or higher. However, when the tensile strength of the steel sheet is 980 MPa or higher, the increased carbon content poses a challenge: the joint tends to become brittle, and the push-in peeling strength decreases when conventional projection welding is performed. According to this disclosure, even in high strength steel sheets having a tensile strength of 980 MPa or higher, the decrease in peeling strength can be suppressed by softening the hardness in region a, which alleviates stress concentration. Furthermore, by reducing the residual stress in region a, the peeling strength of the projection welded portion can be improved, and the delayed fracture resistance can be enhanced. In addition, the above effects can be obtained even when a steel sheet having a tensile strength of less than 980 MPa is used. On the other hand, there is no specific upper limit for the tensile strength of the steel sheet, but the tensile strength is generally 2000 MPa or less.

From the perspective of general automotive steel sheets, it is preferable for the thickness of the steel sheet to be between 0.8 mm and 2.3 mm.

The steel sheet used in this disclosure may have a coated or plated layer on its surface and may be a steel sheet with a galvanized layer (galvanized steel sheet), for example. The galvanized layer includes well-known galvanized layers, such as hot-dip galvanized layers, electrogalvanized layers, Zn-Al coated or plated layers, and Zn-Ni layers. Moreover, the steel sheet used in this disclosure may undergo alloying treatment after zinc coating or plating treatment, resulting in a steel sheet with an alloyed galvanized layer. The galvanized layer may be applied only to one side of the steel sheet or to both sides.

[Nut]

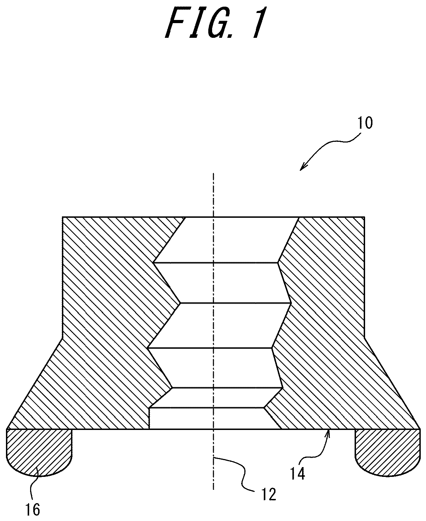

The nut used in this disclosure has a projection. FIG. 1 is a cross-sectional view including a center axis 12 of a nut 10 used in one of the disclosed embodiments. The nut 10 has a projection 16 on a surface 14 that is perpendicular to the center axis 12. In FIG. 1, two projections 16 are symmetrically provided on the surface 14 perpendicular to the center axis 12, spaced 180° apart around the center axis 12 as the axis of rotation. The projections 16 may be symmetrically provided at three or four points around the center axis 12 as the axis of rotation. For the shapes of the nut 10 and projection 16, for example, the square welded nut (1C type) described in JIS B 1196:2010 and various projection shapes may be adopted.

The chemical composition of the nut is not particularly restricted, but for example, S25C (JIS G4051) may be adopted. In particular, when the C content in the chemical composition of the nut is 0.05 mass% or more, the hardness in region a can be suitably obtained. Therefore, the C content of the nut is preferably 0.05 mass% or more, and more preferably 0.07 mass% or more. On the other hand, when the C content in the chemical composition of the nut is 0.40 mass% or less, the hardness in region a can be suitably obtained. Therefore, the C content of the nut is preferably 0.40 mass% or less, and more preferably 0.38 mass% or less.

In the case where three or more projections are provided on a surface perpendicular to the central axis of the nut used in this disclosure, the number of contact points between the projections and the steel sheet during projection welding, which will be described later, becomes three or more, whereby the contact state can be favorably stabilized. Therefore, it is preferable that the number of projections provided on the surface perpendicular to the center axis of the nut used in this disclosure is three or more. On the other hand, in the case where four or fewer projections are provided on the surface perpendicular to the central axis of the nut used in this disclosure, it is possible to favorably prevent the occurrence of projections with insufficient contact pressure during projection welding, which would otherwise result in unbalanced heat input, thereby favorably suppressing a decrease in the strength of the joint. Therefore, it is preferable that the number of projections provided on the surface perpendicular to the center axis of the nut used in this disclosure is four or fewer.

[Projection welded joint]

The projection welded joint according to this disclosure is a projection welded joint in which the above-described steel sheet and nut are projection welded to each other via the projections formed on the nut, thereby forming a joint between the steel sheet and the nut. Herein, the "joint between the steel sheet and the nut" refers to a portion where the steel sheet and the nut are joined by fusion welding or solid-state welding, and which is formed based on the projections of the nut.

The projection welded joint according to this disclosure is characterized in that the minimum hardness Hva (HV) of region a in the steel sheet according to the definition below and the base metal hardness Hvm (HV) of the steel sheet satisfy Equation (1) below:

$$\mathrm{Hva/Hvm} \le 0.90 \qquad\qquad\qquad (1).$$

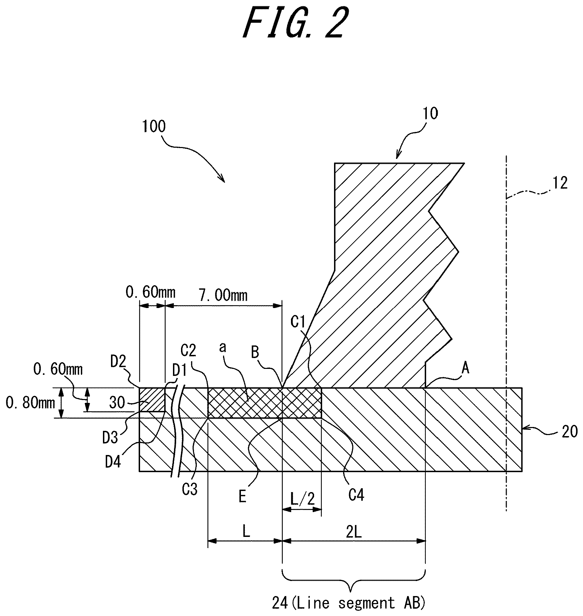

FIG. 2 illustrates a cross-section of a projection welded joint 100 according to one of the disclosed embodiments, the cross section including the center axis 12 of the nut 10 and passing through the center of the joint between the steel sheet 20 and the nut 10. Let point A be the end point on the inner peripheral side of the nut 10 that is in contact with the steel sheet 20, and point B be the end point on the outer peripheral side, also in contact with the steel sheet. The length of a line segment 24 connecting points A and B is defined as 2L. Point C1 is defined as a point located on the line segment 24 at a distance of L/2 from point B toward point A. Point C2 is defined as a point located on a line formed by a surface of the steel sheet 20 that is continuous with the line segment 24, at a distance of L from point B. Point C3 is defined as a point located inside the steel sheet 20, at a depth of 0.80 mm in a thickness direction from point C2. Point C4 is defined as a point located inside the steel sheet 20, at a depth of 0.80 mm in the thickness direction from point C1. An internal region of a rectangle formed by connecting points C1, C2, C3, and C4 is defined as region a. In addition, a measurement region 30 for the base metal hardness Hvm is also illustrated in FIG. 2.

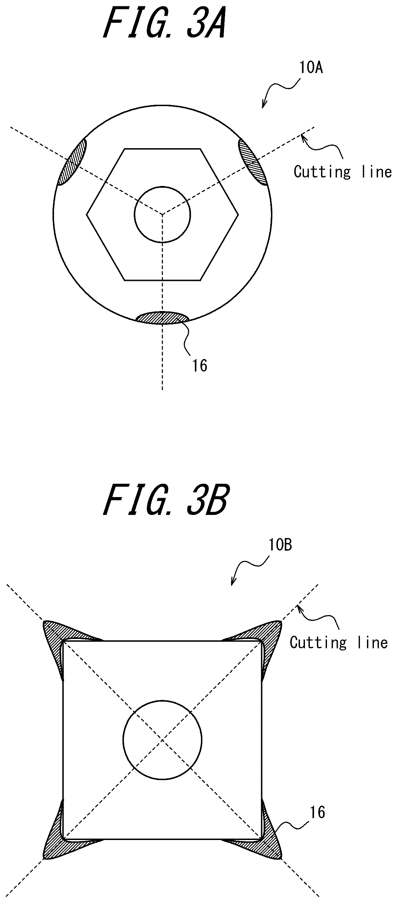

Since the joint is formed based on the projection of the nut, the center of the joint corresponds to the position at which the center of the projection of the nut was located. FIG. 3A illustrates a top view of a nut 10A provided with three projections 16, and FIG. 3B illustrates a top view of a nut 10B provided with four projections 16, both of which are used in one of the disclosed embodiments. The cutting line illustrated in FIG. 3 is a line that passes through the center axis of the nut and the center of the projection 16. After projection welding the steel sheet and the nut, a cross-section as illustrated in FIG. 2 can be obtained by cutting the projection welded joint along the cutting line illustrated in FIG. 3.

When the ratio Hva/Hvm of the minimum hardness Hva of region a to the base metal hardness Hvm of the steel sheet is 0.90 or less, region a is sufficiently softened, thereby improving the push-in peeling strength and delayed fracture resistance. Therefore, the ratio Hva/Hvm of the projection welded joint according to this disclosure is set to be 0.90 or less. Hva/Hvm is preferably 0.87 or less, and more preferably 0.85 or less. On the other hand, when Hva/Hvm is 0.60 or more, region a maintains a certain level of hardness even when it is entirely composed of tempered martensite, thereby allowing favorable push-in peeling strength to be achieved. Therefore, Hva/Hvm is preferably 0.60 or more, and more preferably 0.70 or more.

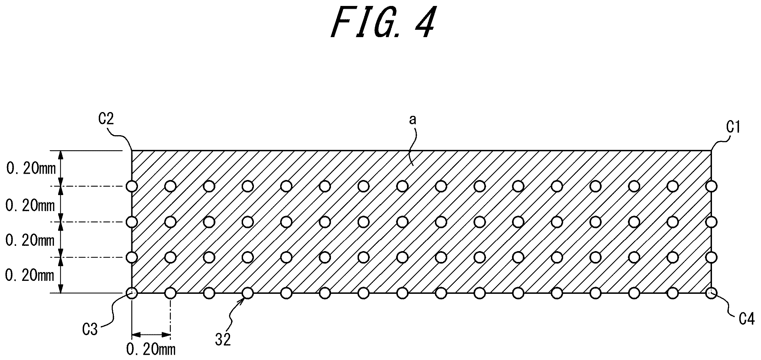

The minimum hardness Hva of region a is determined as follows. FIG. 4 illustrates an enlarged view of region a. In region a, hardness measurement points 32 are set at 0.20 mm intervals in both the thickness direction and the direction perpendicular to the thickness direction of the steel sheet, starting from point C3. Note that measurements are not taken along the line formed by the surface of the steel sheet (the line connecting points C1 and C2), as it becomes the edge of the steel sheet. The Vickers hardness at each hardness measurement point 32 in region a is measured in accordance with JIS Z 2244 (2020) by applying a test load of 300 gf for 15 seconds using an indenter. Among the measurement results obtained, the lowest value is taken as the minimum hardness Hva of region a.

When the minimum hardness Hva of region a is 300 HV or more, region a is appropriately softened, and the push-in peeling strength is suitably obtained due to the relaxation of stress concentration. Therefore, the minimum hardness Hva of region a is preferably 300 HV or more, and more preferably 320 HV or more. On the other hand, when the minimum hardness Hva of region a is 700 HV or less, region a can be softened, thereby allowing favorable peeling strength to be achieved. Therefore, the minimum hardness Hva of region a is 700 HV or less, and more preferably 650 HV or less.

Furthermore, from the perspective of favorably obtaining the effects of this disclosure, it is more preferable that the minimum hardness Hva' of region a' satisfies Equation (1)' below. Here, as illustrated in FIG. 2, point E is defined as a point located inside the steel sheet 20 at a depth of 0.80 mm in the thickness direction from point B, and an internal region of a rectangle formed by connecting points B, C2, C3, and E is defined as region a'. The minimum hardness Hva' of region a' is preferably 300 HV or more, and more preferably 320 HV or more, similarly to Hva. Also, the minimum hardness Hva' of region a' is preferably 700 HV or less, and more preferably 650 HV or less, similarly to Hva. The minimum hardness Hva' of region a' can be determined in the same manner as the measurement method for Hva.

$$\text{Hva'/Hvm} \leq 0.90 \qquad\qquad (1)'$$

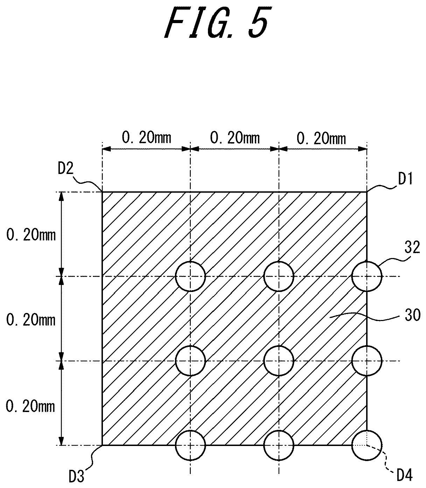

The base metal hardness Hvm of the steel sheet is determined as follows. As illustrated in FIG. 2, in the cross-section of the projection welded joint 100, point D1 is defined as a point located at a distance of 7.00 mm from point B along a line formed by the surface of the steel sheet 20 continuous with the line segment 24. Point D2 is defined as a point located at a distance of 0.60 mm from point D1 along the line formed by the surface of the steel sheet 20, point D3 is defined as a point located at a distance of 0.60 mm inside the steel sheet 20 in the thickness direction from point D2, and point D4 is defined as a point located at a distance of 0.60 mm inside the steel sheet 20 in the thickness direction from point D1. The measurement region 30 for the base metal hardness Hvm is defined as the interior of a square formed by connecting points D1, D2, D3, and D4. Point D1 is defined as a point located at a distance of 7.00 mm from point B so as to avoid the influence of heat during welding. FIG. 5 illustrates an enlarged view of the measurement region 30 for the base metal hardness Hvm. The hardness measurement points 32 are set at 0.20 mm intervals in both the thickness direction and the direction perpendicular to the thickness direction of the steel sheet 20, starting from a point located at a distance of 0.20 mm from point D1 in the thickness direction of the steel sheet 20. At the total of nine hardness measurement points 32 illustrated in FIG. 5, a test load of 300 gf is applied with an indenter for 15 seconds in accordance with JIS Z 2244 (2020), and the Vickers hardness is measured at each point, with the average value obtained being defined as the base metal hardness Hvm. As mentioned above, since the base metal hardness Hvm of the steel sheet is measured at its cross-section, the presence or absence of the coated or plated layer does not affect it.

When the base metal hardness Hvm of the steel sheet is 400 HV or more, the effect of softening can be favorably obtained in region a. Therefore, the base metal hardness Hvm of the steel sheet is preferably 400 HV or more. On the other hand, when the base metal hardness Hvm of the steel sheet is 700 HV or less, the effect of softening can be favorably obtained in region a. Therefore, the base metal hardness Hvm of the steel sheet is preferably 700 HV or less, and more preferably 650 HV or less.

[Method for producing projection welded joint]

The method for producing a projection welded joint according to this disclosure is a method of producing a projection welded joint by projection welding a steel sheet and a nut having a projection to each other via the projection. The steel sheet has the aforementioned chemical composition, and the projection welding has: a main current application step in which current is applied at a current value $I_1$ (kA) for a welding time $t_1$ (ms) to form a joint between the steel sheet and the nut; a first non-current application step in which a non-current period having a non-welding time $t_{c1}$ (ms) satisfying Equation (2) below is provided; a first subsequent-current application step in which current is applied at a current value $I_2$ (kA) satisfying Equation (3) below for a welding time $t_2$ (ms) satisfying Equation (4) below; and further optionally, a second non-current application step in which a non-current period having a non-welding time $t_{c2}$ (ms) satisfying Equation (5) below is provided; followed by a second subsequent-current application step in which current is applied at a current value $I_3$ (kA) satisfying Equation (6) below for a welding time $t_3$ (ms) satisfying Equation (7) below:

$$10 \leq t_{c1} \leq 300 \qquad (2)$$

$$I_1 \leq I_2 \leq 3.00 I_1 \qquad (3)$$

$$30 \leq t_2 \leq 300 \qquad (4)$$

$$0 < t_{c2} \leq 400 \qquad (5)$$

$$0.70 I_2 \leq I_3 \leq 1.30 I_2 \qquad (6)$$

$$0 < t_3 \leq 300 \qquad (7).$$

[Main current application step]

The main current application step is the step of forming a joint between the steel sheet and the nut. In the main current application step, current is applied at the current value $I_1$ for the welding time $t_1$ to form the joint. As long as a joint can be formed, the conditions of the main current application step described below are not particularly limited.

When the current value $I_1$ of the main current application step is 7.0 kA or more, the steel sheet and the nut can be favorably joined. When the current value $I_1$ is less than 7.0 kA, a gap is often observed between the steel sheet and the nut when the joint center is cut after joining the steel sheet and the nut, and the cross section is examined under a microscope. Therefore, the current value $I_1$ of the main current application step is 7.0 kA or more, and more preferably 8.0 kA or more. On the other hand, when the current value $I_1$ is 30.0 kA or less, the joint does not expand excessively, preventing molten metal from splashing outward from the nut as expulsion (splash) and the projection part of the nut from becoming completely crushed, thus effectively preventing the joint from failing to function properly. Therefore, the current value $I_1$ is preferably 30.0 kA or less, and more preferably 28.0 kA or less.

When the welding time $t_1$ of the main current application step is 70 ms or more, the joint can be favorably stabilized. Therefore, the welding time $t_1$ of the main current application step is preferably 70 ms or more, more preferably 100 ms or more, and even more preferably 160 ms or more. On the other hand, when the welding time $t_1$ is 500 ms or less, the joint does not expand excessively, preventing molten metal from splashing outward from the nut as expulsion (splash) and the projection part of the nut from becoming completely crushed, thus effectively preventing the joint from failing to function properly. Therefore, the welding time $t_1$ of the main current application step is preferably 500 ms or less, and more preferably 400 ms or less.

When the electrode force applied during the main current application step is 3.0 kN or more, the current passage area is of an appropriate size, effectively preventing the occurrence of expulsion (splash). Therefore, the electrode force of the main current application step is preferably 3.0 kN or more, and more preferably 3.5 kN or more. On the other hand, when the electrode force of the main current application step is 6.0 kN or less, the expansion of the current passage area is effectively prevented, thereby favorably securing the joint. Therefore, the electrode force of the main current application step is preferably 6.0 kN or less, and more preferably 5.5 kN or less. Note that the electrode force may be limited by the capacity of the equipment used, so it can be adjusted as necessary to obtain the required joint diameter.

[First non-current application step and first subsequent-current application step]

After the main current application step, a softening treatment is performed on the projection welded joint, particularly in region a. Specifically, after the main current application step, the first non-current application step and the first subsequent-current application step are performed. By softening region a, stress concentration during the peel test can be alleviated, and residual stress can be reduced, thereby avoiding delayed fracture.

In the first non-current application step, the projection welded joint is cooled to obtain the effect of softening, sufficiently lowering the temperature of region a.

In the first non-current application step, the welded portion is cooled by maintaining a non-current state for the cooling time $t_{c1}$ (ms) indicated in Equation (2):

$$10 \leq t_{c1} \leq 300 \tag{2}.$$

When the cooling time $t_{c1}$ in the first non-current application step is less than 10 ms, the cooling time is too short, preventing the effect of the first subsequent-current application step from being achieved, which may result in a brittle microstructure in the joint. Furthermore, the combined temperature history of the main current application step and the first subsequent-current application step may prevent the effect of current application after joining from being realized. Therefore, the cooling time $t_{c1}$ should be 10 ms or more. The cooling time $t_{c1}$ is preferably 20 ms or more, and more preferably 40 ms or more. On the other hand, when the cooling time $t_{c1}$ exceeds 300 ms, the welding time will become prolonged, so the cooling time $t_{c1}$ of the first non-current application step should be 300 ms or less.

Following the first non-current application step, the first subsequent-current application step is performed. In the first subsequent-current application step, current is applied to raise the temperature of region a to an appropriate temperature range. The term "appropriate temperature range" refers to the temperature range for softening the hardness of region a. In the first subsequent-current application step, current is applied at the current value $I_2$ (kA) satisfying Equation (3) below for a welding time $t_2$ (ms) satisfying Equation (4) below:

$$I_1 \leq I_2 \leq 3.00 I_1 \tag{3}$$

$$30 \leq t_2 \leq 300 \tag{4}.$$

We have found that performing the first subsequent-current application step with a current value equal to or greater than that of the main current application step can soften region a, which is located away from the joint. What is particularly important here is to achieve the appropriate temperature to soften region a, i.e., to set a temperature at the center of the joint equal to or greater than the $A_{c1}$ point (the temperature at which the transformation from ferrite and cementite to austenite begins), thereby rapidly raising the temperature of region a to a level just below the $A_{c1}$ point in a short period of time. This allows for effective softening of region a.

When the current value $I_2$ of the first subsequent-current application step is less than $I_1$, region a cannot be effectively softened. Therefore, the current value $I_2$ of the first subsequent-current application step is equal to or greater than $I_1$ and preferably equal to or greater than $1.10 I_1$. On the other hand, when the current value $I_2$ of the first subsequent-current application step exceeds $3.00 I_1$, there is a high possibility that the temperature of region a will exceed the $A_{c3}$ point (the temperature at which the transformation from ferrite to austenite is completed), ultimately leading to brittleness. As a result, toughness at the joint cannot be obtained. Therefore, the current value $I_2$ of the first subsequent-current application step is $3.00 I_1$ or less, and preferably $2.80 I_1$ or less.

As mentioned above, since the first subsequent-current application step rapidly raises the temperature in a short time, the welding time $t_2$ during the heating process should be set to 30 ms or more. The welding time $t_2$ is preferably 40 ms or more. On the other hand, when the welding time $t_2$ exceeds 300 ms, the temperature of region a may become too high, also leading to embrittlement. Therefore, the welding time $t_2$ is set to 300 ms or less, and is preferably 100 ms or less, and more preferably 80 ms or less.

The projection welding according to this disclosure may optionally further include, after the first subsequent-current application step, a second non-current application step in which a non-current period having a non-welding time $t_{c2}$ (ms) satisfying Equation (5) below is provided, followed by a second subsequent-current application step in which current is applied at the current value $I_3$ (kA) satisfying Equation (6) below for a welding time $t_3$ (ms) satisfying Equation (7) below. By performing the second non-current application step and the second subsequent-current application step, the softening of region a can be achieved more effectively, reducing residual stress and making it easier to alleviate stress concentration. Therefore, it is preferable to perform the second non-current application step and the second subsequent-current application step after the first subsequent-current application step.

$$0 < t_{c2} \leq 400 \qquad\qquad (5)$$

$$0.70 I_2 \leq I_3 \leq 1.30 I_2 \qquad\qquad (6)$$

$$0 < t_3 \leq 300 \qquad\qquad (7)$$

When the non-welding time $t_{c2}$ of the second non-current application step is 0 ms, there is a possibility that the temperature of region a will rise too much in the second subsequent-current application step. Furthermore, when $I_2$ and $I_3$ are equal, it is assumed that the first subsequent-current application step and the second subsequent-current application step cannot be distinguished. Therefore, the non-welding time $t_{c2}$ of the second non-current step is set to above 0 ms and is preferably 20 ms or more. On the other hand, when the non-welding time $t_{c2}$ of the second non-current step exceeds 400 ms, the effect of subsequent-current application becomes difficult to obtain. Therefore, the non-welding time $t_{c2}$ of the second non-current step is set to 400 ms or less and is preferably 350 ms or less.

When the current value $I_3$ of the second subsequent-current application step is less than 0.70 $I_2$, appropriate temperature control cannot be performed to more effectively soften region a. Therefore, when performing the second subsequent-current application step, the current value $I_3$ is set to 0.70 $I_2$ or more and is preferably 0.75 $I_2$ or more. On the other hand, when the current value $I_3$ of the second subsequent-current application step exceeds 1.30 $I_2$, there is a possibility that the temperature at the end portion of the joint will rise to a level where it melts again. Therefore, when performing the second subsequent-current application step, the current value $I_3$ is set to 1.30 $I_2$ or less and is preferably 1.20 $I_2$ or less.

In this disclosure, the second non-current application step and the second subsequent-current application step are optional. Therefore, the second subsequent-current application step may be omitted, that is, the welding time $t_3$ may be set to 0 ms. In such a case, the second non-current application step is also not performed. In general, a projection welded joint is naturally cooled after projection welding. Therefore, when the subsequent-current application step is not performed, it is not necessary to provide a non-current application step for cooling. Therefore, when performing the second non-current application step and the second subsequent-current application step, the welding time $t_3$ is set to more than 0 ms and is preferably 40 ms or more. On the other hand, the second subsequent-current application step is a step for softening region a, and it is preferable that the welding time is similar to that of the first subsequent-current application step. Therefore, the welding time $t_3$ of the second subsequent-current application step is set to 300 ms or less, and is preferably 100 ms or less, and more preferably 80 ms or less. Following the second subsequent-current application step, a non-current application step and subsequent-current application step may further be repeatedly performed. Repeating the non-current application step and subsequent-current application step is preferable as it greatly increases the effect of softening region a. On the other hand, when the number of repetitions of the non-current application step and subsequent-current application step is too large, the effect will saturate, so the number of repetitions of these steps is preferably less than 10 times, and more preferably less than 4 times.

As described above, in the projection welding method of this disclosure, by appropriately controlling the welding conditions of the postheating step, it is possible to soften region a, thereby relieving stress concentration and reducing residual stress. That is, the projection welded joint obtained by this welding method can exhibit improved push-in peeling strength. Therefore, even when welding a steel sheet that contains a relatively high amount of C in its chemical composition, specifically, a high strength steel sheet having a tensile strength of 980 MPa or more and a C content of 0.05 mass% to 0.50 mass% as described above, the peeling strength can be further improved.

In addition, for steps and conditions not described in this specification, conventional methods can be used.

EXAMPLES

As an embodiment of this disclosure, a projection welded joint was fabricated by projection welding a steel sheet and a nut. For the test pieces, steel sheets (Steel Sheets A to M) having a tensile strength of 780 MPa to 1800 MPa and a thickness of 1.0 mm to 1.8 mm were used. Table 1 lists the tensile strength (TS) , thickness, and chemical composition of Steel Sheets A to M used. The balance of the chemical composition listed in Table 1 is Fe and inevitable impurities, and "-" indicates that the content of the respective element is less than or equal to the detection limit.

As test pieces, cold-rolled steel sheets or GA steel sheets (galvannealed steel sheets) of each steel sheet were prepared. The test pieces were sized with a length of 50 mm and a width of 50 mm, and a hole 11 mm in diameter was drilled in the center of each piece. M8 welding nuts, each provided with three projections arranged symmetrically at 120° intervals around the center axis, were prepared. The test piece and the nut were set on the AC welder so that the center of the hole in the test piece aligns with the center of the threaded hole of the nut, and welding was performed under the welding conditions listed in Table 2 to obtain a welded body. For the steel grade of the M8 welding nuts described above, S25C (JIS G4051) was selected. The resistance welding was performed using a single-phase AC (50 Hz) resistance welder of the servomotor pressure type mounted on the welding gun, thereby producing a projection welded joint. The pair of electrode tips used was a flat type with a diameter of 30 mm. A bolt was fastened into the nut hole of the obtained projection welded joint to prepare a bolt-fastened test piece.

[Table 1]

Table 1

| Steel sheet | TS | Sheet thickness | Chemical composition (mass%) | | | | | | | | | | | | | | | | | | Classification |
|---|---|---|---|---|---|---|---|---|---|---|---|---|---|---|---|---|---|---|---|---|---|---|
| | | | C | Si | Mn | P | S | N | O | Al | B | Ca | Cr | Cu | Ni | Mo | Ti | V | Nb | Sb | Sn | |
| A | 1180MPa | 1.4mm | 0.20 | 1.3 | 3.0 | 0.01 | 0.001 | 0.003 | 0.005 | 0.02 | 0.0006 | 0.002 | 0.20 | 0.01 | 0.15 | 0.01 | 0.005 | 0.006 | 0.008 | 0.008 | 0.001 | Conforming Steel |
| B | 1180MPa | 1.2mm | 0.12 | 0.4 | 4.0 | 0.01 | 0.001 | 0.002 | 0.005 | 0.02 | 0.0006 | 0.002 | 0.40 | 0.01 | 0.15 | 0.01 | 0.005 | 0.006 | 0.008 | 0.008 | 0.001 | Conforming Steel |
| C | 980MPa | 1.4mm | 0.20 | 1.1 | 2.0 | 0.01 | 0.002 | 0.002 | 0.010 | 0.02 | 0.0006 | 0.005 | 0.20 | 0.01 | 0.15 | 0.01 | 0.010 | 0.050 | 0.008 | 0.021 | 0.001 | Conforming Steel |
| D | 780MPa | 1.0mm | 0.10 | 0.9 | 3.5 | 0.01 | 0.001 | 0.005 | 0.005 | 0.03 | 0.0006 | 0.002 | 0.20 | 0.20 | 0.30 | 0.01 | 0.005 | 0.006 | 0.008 | 0.002 | 0.050 | Conforming Steel |
| E | 1470MPa | 1.6mm | 0.50 | 0.5 | 1.5 | 0.03 | 0.001 | 0.002 | 0.005 | 0.02 | 0.0006 | 0.002 | 0.20 | 0.05 | 0.15 | 0.01 | 0.005 | 0.006 | 0.008 | 0.008 | 0.001 | Conforming Steel |
| F | 1470MPa | 1.4mm | 0.30 | 1.5 | 2.5 | 0.01 | 0.001 | 0.003 | 0.005 | 0.02 | 0.0020 | 0.002 | 0.20 | 0.01 | 0.15 | 0.01 | 0.030 | 0.006 | 0.008 | 0.006 | 0.001 | Conforming Steel |
| G | 1470MPa | 1.2mm | 0.30 | 0.3 | 1.5 | 0.01 | 0.001 | 0.002 | 0.005 | 0.02 | 0.0006 | 0.002 | 0.20 | 0.05 | 0.15 | 0.20 | 0.005 | 0.006 | 0.008 | 0.006 | 0.001 | Conforming Steel |
| H | 1800MPa | 1.2mm | 0.40 | 1.2 | 2.0 | 0.01 | 0.001 | 0.002 | 0.005 | 0.02 | 0.0006 | 0.002 | 0.20 | 0.01 | 0.15 | 0.01 | 0.005 | 0.006 | 0.050 | 0.008 | 0.001 | Conforming Steel |
| I | 1470MPa | 1.4mm | _0.60_ | 2.0 | 1.5 | 0.01 | 0.001 | 0.002 | 0.005 | 0.02 | 0.0006 | 0.002 | 0.20 | 0.01 | 0.15 | 0.01 | 0.005 | 0.006 | 0.008 | 0.008 | 0.001 | Comparative Steel |
| J | 980MPa | 1.8mm | 0.12 | 0.5 | 2.0 | 0.05 | 0.003 | 0.006 | 0.021 | 0.02 | 0.0008 | 0.002 | 0.35 | 0.62 | 0.72 | 0.01 | 0.005 | 0.006 | 0.008 | 0.005 | 0.001 | Conforming Steel |
| K | 980MPa | 1.2mm | 0.12 | 0.9 | 1.8 | 0.01 | 0.001 | 0.002 | 0.007 | 0.81 | 0.0006 | 0.003 | 0.20 | 0.01 | 0.15 | 0.70 | 0.095 | 0.006 | 0.008 | 0.004 | 0.005 | Conforming Steel |
| L | 1470MPa | 1.4mm | 0.40 | 0.5 | 1.5 | 0.03 | 0.001 | 0.002 | 0.005 | - | - | - | - | - | - | - | - | - | - | - | - | Conforming Steel |
| M | 1470MPa | 1.4mm | 0.20 | 1.8 | 2.5 | 0.01 | 0.001 | 0.003 | 0.005 | - | - | - | - | - | - | - | - | - | - | - | - | Conforming Steel |

Table 2

[Table 2]

| Sample No. | Steel sheet | Cold-rolled steel sheet GA steel sheet | Welding conditions | | | | | | | | | | | | Evaluation results | | | | | | | | | Classification |
|---|---|---|---|---|---|---|---|---|---|---|---|---|---|---|---|---|---|---|---|---|---|---|---|---|
| | | | Electrode force F | Current value in main current application step $I_1$ | Welding time in main current application step $t_1$ | Non-welding time in first non-current application step $t_{c1}$ | Current value in first subsequent-current application step $I_2$ | $I_2/I_1$ | Welding time in first subsequent-current application step $t_2$ | Non-welding time in second non-current application step $t_{c2}$ | Current value in second subsequent-current application step $I_3$ | Welding time in second subsequent-current application step $t_3$ | $I_3/I_2$ | Specified current-application method | Steel sheet base metal hardness Hvm | Minimum hardness Hva of region a | Hva/Hvm | Minimum hardness Hva' of region a' | Hva'/Hvm | Hardness evaluation | Peeling strength | Evaluation results of peeling strength | Delayed fracture resistance | |
| | | | kN | kA | ms | ms | kA | | ms | ms | kA | ms | | | HV | HV | | HV | | | kN | | | |
| 1 | A | Cold-rolled steel sheet | 4.0 | 8.0 | 300 | - | - | - | - | - | - | - | - | × | 525 | 500 | 0.95 | 552 | 1.05 | × | 2.10 | × | × | Comp. Ex. |
| 2 | A | Cold-rolled steel sheet | 4.0 | 20.0 | 300 | 10 | 21 | 1.05 | 30 | 20 | 30 | 60 | 1.43 | × | 525 | 532 | 1.01 | 532 | 1.01 | × | 4.50 | △ | × | Comp. Ex. |
| 3 | A | Cold-rolled steel sheet | 4.0 | 18.0 | 400 | 160 | 23 | 1.28 | 60 | 120 | 24 | 70 | 1.04 | O | 525 | 321 | 0.61 | 321 | 0.61 | O | 15.40 | O | O | Ex. |
| 4 | A | GA steel sheet | 5.0 | 16.0 | 500 | 240 | 22 | 1.38 | 90 | - | - | - | - | O | 525 | 455 | 0.87 | 432 | 0.82 | O | 12.20 | O | O | Ex. |
| 5 | B | Cold-rolled steel sheet | 6.0 | 7.0 | 500 | 60 | 18 | 2.57 | 100 | 220 | 23 | 40 | 1.28 | O | 425 | 357 | 0.84 | 365 | 0.86 | O | 8.80 | O | O | Ex. |
| 6 | B | Cold-rolled steel sheet | 6.0 | 7.0 | 500 | 60 | 18 | 2.57 | 100 | 220 | 23 | 20 | 1.28 | O | 425 | 375 | 0.88 | 375 | 0.88 | O | 6.80 | O | O | Ex. |
| 7 | B | Cold-rolled steel sheet | 6.0 | 10.0 | 160 | 120 | 19 | 1.90 | 50 | 80 | 18 | 80 | 0.95 | O | 425 | 345 | 0.81 | 345 | 0.81 | O | 10.80 | O | O | Ex. |
| 8 | B | Cold-rolled steel sheet | 6.0 | 12.0 | 200 | 5 | 20 | 1.67 | 50 | 200 | 15 | 60 | 0.75 | × | 425 | 477 | 1.12 | 477 | 1.12 | × | 4.10 | △ | × | Comp. Ex. |
| 9 | C | Cold-rolled steel sheet | 5.0 | 10.0 | 300 | 20 | 8 | 0.80 | 60 | 160 | 9 | 80 | 1.13 | × | 508 | 499 | 0.98 | 499 | 0.98 | × | 3.80 | △ | × | Comp. Ex. |
| 10 | C | GA steel sheet | 5.0 | 14.0 | 400 | 180 | 20 | 1.43 | 80 | 20 | 22 | 40 | 1.10 | O | 508 | 421 | 0.83 | 421 | 0.83 | O | 12.50 | O | O | Ex. |
| 11 | D | Cold-rolled steel sheet | 4.5 | 18.0 | 400 | 220 | 23 | 1.28 | 40 | 180 | 28 | 60 | 1.22 | O | 435 | 354 | 0.81 | 354 | 0.81 | O | 15.50 | O | O | Ex. |
| 12 | D | Cold-rolled steel sheet | 5.0 | 18.0 | 300 | 80 | 21 | 1.17 | 80 | 80 | 18 | 80 | 0.86 | O | 435 | 341 | 0.78 | 341 | 0.78 | O | 16.70 | O | O | Ex. |
| 13 | D | Cold-rolled steel sheet | 5.0 | 18.0 | 300 | 80 | 21 | 1.17 | 80 | 280 | 18 | 30 | 0.86 | O | 435 | 388 | 0.89 | 388 | 0.89 | O | 12.40 | O | O | Ex. |
| 14 | E | Cold-rolled steel sheet | 5.0 | 16.0 | 500 | 200 | 29 | 1.81 | 200 | 10 | 30 | 80 | 1.03 | O | 720 | 625 | 0.87 | 635 | 0.88 | O | 4.20 | △ | O | Comp. Ex. |
| 15 | E | Cold-rolled steel sheet | 5.0 | 16.0 | 500 | 200 | 29 | 1.81 | 60 | 120 | 24 | 80 | 0.83 | O | 720 | 601 | 0.83 | 601 | 0.83 | O | 14.40 | O | O | Ex. |
| 16 | E | Cold-rolled steel sheet | 5.0 | 16.0 | 400 | 160 | 27 | 1.69 | 80 | 120 | 17 | 40 | 0.63 | × | 720 | 688 | 0.96 | 688 | 0.96 | × | 3.10 | × | × | Comp. Ex. |
| 17 | F | Cold-rolled steel sheet | 5.0 | 22.0 | 400 | 40 | 24 | 1.09 | 50 | 140 | 17 | 80 | 0.71 | O | 597 | 472 | 0.79 | 472 | 0.79 | O | 12.40 | O | O | Ex. |
| 18 | F | Cold-rolled steel sheet | 5.0 | 24.0 | 500 | 5 | 28 | 1.17 | 40 | 280 | 22 | 60 | 0.79 | × | 597 | 594 | 0.99 | 594 | 0.99 | × | 2.80 | × | × | Comp. Ex. |
| 19 | F | Cold-rolled steel sheet | 5.0 | 24.0 | 400 | 180 | 30 | 1.25 | 60 | - | - | - | - | O | 597 | 512 | 0.86 | 512 | 0.86 | O | 16.50 | O | O | Ex. |

Table 2 (cont'd)

| Sample No. | Steel sheet | Cold-rolled steel sheet / GA steel sheet | Welding conditions | | | | | | | | | | | | Evaluation results | | | | | | | | | Classification |
|---|---|---|---|---|---|---|---|---|---|---|---|---|---|---|---|---|---|---|---|---|---|---|---|---|
| | | | Electrode force F | Current value in main current application step $I_1$ | Welding time in main current application step $t_1$ | Non-welding time in first non-current application step $t_{c1}$ | Current value in first subsequent-current application step $I_2$ | $I_2/I_1$ | Welding time in first subsequent-current application step $t_2$ | Non-welding time in second non-current application step $t_{c2}$ | Current value in second subsequent-current application step $I_3$ | Welding time in second subsequent-current application step $t_3$ | $I_3/I_2$ | Specified current-application method | Steel sheet base metal hardness Hvm | Minimum hardness Hva of region a | Hva /Hvm | Minimum hardness Hva' of region a' | Hva' /Hvm | Hardness evaluation | Peeling strength | Evaluation results of peeling strength | Delayed fracture resistance | |
| | | | kN | kA | ms | ms | kA | | ms | ms | kA | ms | | | HV | HV | | HV | | | kN | | | |
| 20 | G | Cold-rolled steel sheet | 4.0 | 28.0 | 160 | 80 | 32 | 1.14 | 40 | 120 | 23 | 60 | 0.72 | O | 602 | 499 | 0.83 | 505 | 0.84 | O | 18.90 | O | O | Ex. |
| 21 | G | Cold-rolled steel sheet | 5.0 | 18.0 | 300 | 120 | 55 | **3.06** | 30 | 180 | 44 | 80 | 0.80 | **x** | 602 | 612 | **1.02** | 612 | 1.02 | x | 2.90 | x | x | **Comp. Ex.** |
| 22 | G | GA steel sheet | 5.0 | 18.0 | 400 | 120 | 20 | 1.11 | 60 | 220 | 18 | 50 | 0.90 | O | 602 | 510 | 0.85 | 510 | 0.85 | O | 15.90 | O | O | Ex. |
| 23 | H | Cold-rolled steel sheet | 5.0 | 14.0 | 500 | 140 | 24 | 1.71 | 80 | 80 | 18 | 40 | 0.75 | O | 618 | 546 | 0.88 | 546 | 0.88 | O | 12.50 | O | O | Ex. |
| 24 | H | Cold-rolled steel sheet | 5.0 | 16.0 | 500 | 280 | 26 | 1.63 | 80 | - | - | - | - | O | 618 | 516 | 0.83 | 508 | 0.82 | O | 13.60 | O | O | Ex. |
| 25 | H | Cold-rolled steel sheet | 5.0 | 20.0 | 500 | 100 | 18 | **0.90** | 40 | 160 | 15 | 80 | 0.89 | **x** | 618 | 602 | **0.97** | 602 | 0.97 | x | 2.20 | x | x | **Comp. Ex.** |
| 26 | **1** | Cold-rolled steel sheet | 5.0 | 25.0 | 400 | 100 | 27 | 1.08 | 80 | 40 | 21 | 80 | 0.78 | O | 745 | 711 | **0.95** | 711 | 0.95 | x | 1.80 | x | x | **Comp. Ex.** |
| 27 | J | Cold-rolled steel sheet | 5.5 | 20.0 | 300 | 180 | 24 | 1.20 | 80 | 180 | 18 | 40 | 0.75 | O | 443 | 385 | 0.87 | 385 | 0.87 | O | 14.90 | O | O | Ex. |
| 28 | J | Cold-rolled steel sheet | 5.5 | 12.0 | 400 | 40 | 19 | 1.58 | **20** | - | - | - | - | **x** | 443 | 478 | **1.08** | 491 | 1.11 | x | 5.50 | △ | x | **Comp. Ex.** |
| 29 | J | Cold-rolled steel sheet | 5.5 | 14.0 | 400 | 140 | 16 | 1.14 | 40 | 120 | 12 | 80 | 0.75 | O | 443 | 355 | 0.80 | 355 | 0.80 | O | 12.40 | O | O | Ex. |
| 30 | K | Cold-rolled steel sheet | 5.5 | 12.0 | 500 | 120 | 20 | 1.67 | 60 | 120 | 15 | 80 | 0.80 | O | 465 | 386 | 0.83 | 386 | 0.83 | O | 8.90 | O | O | Ex. |
| 31 | K | GA steel sheet | 5.5 | 18.0 | 300 | 280 | 24 | 1.33 | 40 | 140 | 18 | 60 | 0.75 | O | 465 | 365 | 0.78 | 365 | 0.78 | O | 11.30 | O | O | Ex. |
| 32 | L | GA steel sheet | 5.5 | 18.0 | 300 | 280 | 24 | 1.33 | 40 | 140 | 18 | 50 | 0.75 | O | 605 | 521 | 0.86 | 534 | 0.88 | O | 12.50 | O | O | Ex. |
| 33 | L | Cold-rolled steel sheet | 5.5 | 18.0 | 300 | 280 | 24 | 1.33 | 40 | 140 | 18 | 200 | 0.75 | O | 605 | 611 | **1.01** | 520 | 0.86 | x | 4.50 | △ | x | **Comp. Ex.** |
| 34 | M | Cold-rolled steel sheet | 5.5 | 18.0 | 300 | 280 | 24 | 1.33 | 40 | - | - | - | - | O | 503 | 423 | 0.84 | 423 | 0.84 | O | 12.50 | O | O | Ex. |
| 35 | H | Cold-rolled steel sheet | 5.0 | 8.0 | 500 | 280 | 10 | 1.25 | 300 | 140 | 12 | 250 | 1.20 | O | 618 | 525 | 0.85 | 508 | 0.82 | O | 5.00 | △ | O | Ex. |
| 36 | E | Cold-rolled steel sheet | 5.0 | 18.0 | 400 | 160 | 24 | 1.33 | **320** | 120 | 26 | 40 | 1.08 | **x** | 720 | 765 | **1.06** | 755 | 1.05 | x | 2.90 | x | x | **Comp. Ex.** |
| 37 | B | Cold-rolled steel sheet | 6.0 | 12.0 | 400 | 160 | 18 | 1.50 | 100 | 220 | 23 | 300 | 1.28 | O | 425 | 357 | 0.84 | 365 | 0.86 | O | 5.80 | △ | O | Ex. |
| 38 | F | Cold-rolled steel sheet | 6.0 | 12.0 | 300 | 160 | 23 | 1.92 | 150 | 220 | 25 | **320** | 1.09 | **x** | 597 | 655 | **1.10** | 632 | 1.06 | x | 2.50 | x | x | **Comp. Ex.** |

16

For the obtained projection welded joints and bolt-fastened test pieces, the hardness of the base metal and region a, the peeling strength, and the delayed fracture resistance were measured by the methods described below.

[Hardness evaluation]

The measurement of the hardness of the base metal and region a was conducted as follows. The projection welded joints were cut at positions including the center axes of the nuts and passing through the centers of the joints between the steel sheets and the nuts to prepare test pieces. After ultrasonic cleaning of the test pieces, resin embedding was performed to obtain samples. The cross-sectional surfaces along the thickness direction of the obtained samples were polished and then etched using a picric acid solution. Hardness measurements were performed on the cross-sectional surfaces of the etched samples as described above, and the results are listed in Table 2. In the "Hardness evaluation" column of Table 2, "o" was entered as Pass when the hardness measurement results satisfied Equation (1) (i.e., when Hva/Hvm ≤ 0.90), and "×" was entered as Fail when Equation (1) was not satisfied.

[Peeling strength evaluation]

Using the obtained bolt-fastened test pieces, the maximum load at which the nut detached from the steel sheet was measured by a push-in peel test in accordance with JIS B1196:2010. This measured value was defined as the peeling strength (kN). In this disclosure, the lower limit value of 3.73 kN specified in JIS B1196:2010 was used as the criterion for peeling strength. When the peeling strength was less than 3.73 kN, it was evaluated as "×" indicating inferior peeling strength; when it was 3.73 kN or more but less than 6.00 kN, it was evaluated as "Δ" indicating peeling strength equivalent to conventional levels; and when it was 6.00 kN or more, it was evaluated as "o" indicating superior peeling strength. Table 2 indicates the measured peeling strength and its evaluation results.

[Delayed fracture resistance evaluation]

After leaving the projection welded joint standing for 24 hours, the joint was cut, resin embedding was performed, and then the cross section of the welded portion was observed. The cross-section was visually inspected to evaluate the occurrence of delayed fracture. Those with delayed fracture were evaluated as "×", and those without delayed fracture were evaluated as "o".

As can be seen from Table 2, the projection welded joints of Examples were good welded joints having excellent peeling strength and delayed fracture resistance. In contrast, good projection welded joints were not obtained in the comparative examples.

INDUSTRIAL APPLICABILITY

This disclosure can provide a projection welded joint with improved peeling strength and delayed fracture resistance.

REFERENCE SIGNS LIST

100 Projection welded joint
10 Nut
10A Nut provided with three projections
10B Nut provided with four projections
12 Center axis of the nut
14 Surface perpendicular to the center axis of the nut
16 Projection
20 Steel sheet
24 Line segment formed by the joined interface of the nut and the steel sheet
30 Measurement region of base metal hardness Hvm
32 Hardness measurement point

**Claims**

1. A projection welded joint in which a steel sheet and a nut having a projection are projection welded to each other via the projection,

   wherein the steel sheet comprises a chemical composition containing, in mass%,
   C: 0.05 % or more and 0.50 % or less,
   Si: 0.1 % or more and 2.0 % or less,
   Mn: 1.5 % or more and 4.0 % or less,
   P: 0.10 % or less,
   S: 0.005 % or less,
   N: 0.010 % or less, and
   O: 0.030 % or less,
   and further optionally containing at least one element selected from the group consisting of
   Al: 2.00 % or less,
   B: 0.0050 % or less,
   Ca: 0.005 % or less,
   Cr: 1.00 % or less,
   Cu: 0.80 % or less,
   Ni: 1.00 % or less,
   Mo: 1.00 % or less,
   Ti: 0.200 % or less,
   V: 0.500 % or less,
   Nb: 0.080 % or less,
   Sb: 0.200 % or less, and
   Sn: 0.200 % or less, with the balance being Fe and inevitable impurities, and
   a minimum hardness Hva (HV) of region a according to the definitions below in the steel sheet and a base metal hardness Hvm (HV) of the steel sheet satisfy Equation (1) below:

$$\mathrm{Hva/Hvm} \leq 0.90 \qquad\qquad (1)$$

   in which region a above is defined below based on a cross-section including a center axis of the nut and passing through a center of a joint between the steel sheet and the nut, of the projection welded joint: with an end point on an inner peripheral side of the nut in contact with the steel sheet being defined as point A, and an end point on an outer peripheral side of the nut in contact with the steel sheet being defined as point B, a length of a line segment connecting points A and B being defined as 2L, a point located on the line segment at a distance of L/2 from point B toward point A being defined as point C1, a point located on a line formed by a surface of the steel sheet continuous with the line segment, at a distance of L from point B, being defined as point C2, a point located inside the steel sheet at a depth of 0.80 mm in a sheet thickness direction from point C2 being defined as point C3, and a point located inside the steel sheet at a depth of 0.80 mm in the sheet thickness direction from point C1 being defined as point C4, an internal region of a rectangle formed by connecting points C1, C2, C3, and C4 is defined as region a.

2. A method for producing a projection welded joint by projection welding a steel sheet and a nut having a projection to each other via the projection,

   wherein the steel sheet comprises a chemical composition containing, in mass%,
   C: 0.05 % or more and 0.50 % or less,
   Si: 0.1 % or more and 2.0 % or less,
   Mn: 1.5 % or more and 4.0 % or less,
   P: 0.10 % or less,
   S: 0.005 % or less,
   N: 0.010 % or less, and
   O: 0.030 % or less,
   and further optionally containing at least one element selected from the group consisting of
   Al: 2.00 % or less,
   B: 0.0050 % or less,

Ca: 0.005 % or less,
Cr: 1.00 % or less,
Cu: 0.80 % or less,
Ni: 1.00 % or less,
Mo: 1.00 % or less,
Ti: 0.200 % or less,
V: 0.500 % or less,
Nb: 0.080 % or less,
Sb: 0.200 % or less, and
Sn: 0.200 % or less, with the balance being Fe and inevitable impurities, and
the projection welding has:

a main current application step in which current is applied at a current value $I_1$ (kA) for a welding time $t_1$ (ms) to form a joint between the steel sheet and the nut;
a first non-current application step in which a non-current period having a non-welding time $t_{c1}$ (ms) satisfying Equation (2) below is provided;
a first subsequent-current application step in which current is applied at a current value $I_2$ (kA) satisfying Equation (3) below for a welding time $t_2$ (ms) satisfying Equation (4) below; and
further optionally,
a second non-current application step in which a non-current period having a non-welding time $t_{c2}$ (ms) satisfying Equation (5) below is provided, followed by a second subsequent-current application step in which current is applied at a current value $I_3$ (kA) satisfying Equation (6) below for a welding time $t_3$ (ms) satisfying Equation (7) below:

$$10 \leq t_{c1} \leq 300 \tag{2}$$

$$I_1 \leq I_2 \leq 3.00 I_1 \tag{3}$$

$$30 \leq t_2 \leq 300 \tag{4}$$

$$0 < t_{c2} \leq 400 \tag{5}$$

$$0.70 I_2 \leq I_3 \leq 1.30 I_2 \tag{6}$$

$$0 < t_3 \leq 300 \tag{7}.$$

EP 4 653 119 A1

FIG. 1

20

# FIG. 2

24 (Line segment AB)

## FIG. 3A

10A

Cutting line

16

## FIG. 3B

10B

Cutting line

16

EP 4 653 119 A1

## FIG. 4

# FIG. 5

## INTERNATIONAL SEARCH REPORT

| International application No. |
| --- |
| **PCT/JP2024/016147** |

| A. | CLASSIFICATION OF SUBJECT MATTER |
| --- | --- |

*B23K 11/14*(2006.01)i; *B23K 11/16*(2006.01)i; *B23K 11/24*(2006.01)i; *C22C 38/00*(2006.01)i; *C22C 38/60*(2006.01)i
FI: B23K11/14 310; B23K11/16; B23K11/24 315; C22C38/00 301R; C22C38/00 301T; C22C38/00 301Z; C22C38/60

According to International Patent Classification (IPC) or to both national classification and IPC

| B. | FIELDS SEARCHED |
| --- | --- |

Minimum documentation searched (classification system followed by classification symbols)

B23K11/14; B23K11/16; B23K11/24; C22C38/00; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2004-050280 A (AISIN TAKAOKA CO., LTD.) 19 February 2004 (2004-02-19) paragraphs [0011], [0016]-[0023], fig. 2-5 | 1-2 |
| A | JP 2010-116592 A (KABUSHIKI KAISHA KOBE SEIKO SHO) 27 May 2010 (2010-05-27) entire text, all drawings | 1-2 |
| A | JP 7020597 B1 (JFE STEEL CORPORATION) 16 February 2022 (2022-02-16) entire text, all drawings | 1-2 |
| A | WO 2023/047840 A1 (NIPPON STEEL CORPORATION) 30 March 2023 (2023-03-30) entire text, all drawings | 1-2 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 June 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
**Information on patent family members**

International application No.

**PCT/JP2024/016147**

| Patent document cited in search report | | | Publication date (day/month/year) | Patent family member(s) | Publication date (day/month/year) |
|---|---|---|---|---|---|
| JP | 2004-050280 | A | 19 February 2004 | (Family: none) | |
| JP | 2010-116592 | A | 27 May 2010 | (Family: none) | |
| JP | 7020597 | B1 | 16 February 2022 | US 2023/0347440 A1 entire text, all drawings KR 10-2023-0011386 A CN 115735015 A | |
| WO | 2023/047840 | A1 | 30 March 2023 | (Family: none) | |

Form PCT/ISA/210 (patent family annex) (July 2022)

**EP 4 653 119 A1**

**REFERENCES CITED IN THE DESCRIPTION**

**Patent documents cited in the description**

- JP 2012157900 A
- JP 2013078784 A